(19) Europäisches Patentamt
European Patent Office
Office européen des brevets

(11) **EP 4 567 145 A1**

(12) **EUROPEAN PATENT APPLICATION**
published in accordance with Art. 153(4) EPC

(43) Date of publication:
**11.06.2025 Bulletin 2025/24**

(21) Application number: 23850179.5

(22) Date of filing: **04.08.2023**

(51) International Patent Classification (IPC):
*C22C 38/00* (2006.01)     *C22C 38/58* (2006.01)
*B23K 11/11* (2006.01)     *B23K 11/16* (2006.01)
*B23K 11/24* (2006.01)

(52) Cooperative Patent Classification (CPC):
**B23K 11/11; B23K 11/16; B23K 11/24; C22C 38/00; C22C 38/58**

(86) International application number:
**PCT/JP2023/028603**

(87) International publication number:
**WO 2024/029626 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.08.2022 JP 2022125100**

(71) Applicant: **NIPPON STEEL CORPORATION**
**Chiyoda-ku**
**Tokyo 100-8071 (JP)**

(72) Inventor: **YOSHINAGA, Chisato**
**Tokyo 100-8071 (JP)**

(74) Representative: **Vossius & Partner**
**Patentanwälte Rechtsanwälte mbB**
**Siebertstrasse 3**
**81675 München (DE)**

(54) **METHOD FOR MANUFACTURING SPOT WELDED JOINT, AND SPOT WELDED JOINT**

(57)     A method of producing a spot-welded joint includes: a main welding step of forming a fusion zone by performing energization on a sheet combination including a high-strength steel sheet having Ceq of 0.36% by mass or more at a main welding current value $I_{w0}$ (kA) so as to satisfy predetermined conditions; a first post-energization step of performing energization at a first post-energization current value $I_{w1}$ for time $t_{w1}$ following no-energization for time $t_{c1}$ (ms); and a second post-energization step of performing energization at a current value $I_{w2}$ for time $t_{w2}$ following no-energization for time $t_{c2}$ after the first post-energization step; in which the main welding step to final post-energization step are performed sequentially while maintaining a pressurizing force $F_E$ (N). A spot-welded joint has a proportion of crystal grains with an aspect ratio of 7 or more being 50% or less in the middle portion in a long axis direction of its nugget.

FIG.3

**Description**

Technical Field

The present disclosure relates to a method of producing a spot-welded joint and a spot-welded joint.

Background Art

In recent years, in the field of automobiles, there has been a demand for reducing the weight of vehicle bodies in order to improve fuel efficiency and reduce $CO_2$ emissions. In addition, in order to improve collision safety, there has been a demand for increasing the strength of vehicle body members. To meet these requirements, it is effective to use high-strength steel sheets for the vehicle body and parts. Spot-welding is mainly used for assembling vehicle bodies and attaching parts.

Tensile strength is an important property for a joint formed by spot-welding a sheet combination of a plurality of steel sheets overlapped (sometimes referred to as "spot-welded joint" in the disclosure). The tensile strength of spot-welded joints includes tensile shear strength (TSS) measured with a tensile load applied in the shear direction and cross tensile strength (hereinafter also referred to as "CTS" or "joint strength") measured with a tensile load applied in the peeling direction.

Generally, when a spot-welded joint is produced using a high-strength steel sheet, the deformability due to pressurization by welding electrodes is small, resulting in increased stress concentration in the weld zone. Furthermore, the toughness of the weld zone decreases due to quenching of the weld zone. Therefore, spot-welded joints, including high-strength steel sheets, tend to have a low CTS, and there is a demand for improving the CTS.

To ensure the strength and toughness of a spot-welded joint using a sheet combination of steel sheets including a high-strength steel sheet, a method in which after main welding for forming a fusion zone that serves as a nugget, cooling is performed for a certain period, after which additional energization is performed, thereby carrying out tempering energization for tempering a nugget and a heat-affected zone, and a method in which post-energization is performed within a relatively short period after main welding, are suggested.

For example, Patent Literature 1 discloses a resistance spot-welding method in which two or more overlapped high-strength thin steel sheets are clamped with a pair of electrodes, and a current is applied thereto under a pressurizing force so as to form a weld zone, the method including: a first step of performing energization at a welding current (Im) to form a nugget; a second step of performing energization on the weld zone at a current value not more than the welding current (Im); a third step of cooling the weld zone; and a fourth step of performing energization on the weld zone at a current value more than the welding current (Im) to heat the weld zone to a recrystallization temperature range in that order.

Patent Literature 2 discloses a resistance spot-welding method in which welding is carried out by performing energization on a sheet combination of two or more overlapped steel sheets with a total sheet thickness t (mm), which is clamped with a pair of welding electrodes under pressurization, the method including a first step of forming a nugget; and a second step of maintaining a weld zone with no-energization while applying pressure with the electrodes for cooling, followed by energization, in which the energization time TA (ms) and the energization current IA (kA) in the first step and the energization time TB (ms) and the energization current IB (kA) in the second step satisfy Formulas (1) and (2), the energization current IB (kA) is higher than the energization current IA(kA), and the holding time Th (ms) for no-energization in the second step satisfies Formula (3) in relation to the total sheet thickness t (mm) of the sheet combination, the diameter d (mm) of the nugget, and the tip surface area S ($mm^2$) of the welding electrode:

$$0.05 < (IB2 \times TB)/(IA2 \times TA) < 1.0 \quad (1);$$

$$20 \leq TB \leq 100 \quad (2);$$

$$10 \times (t \times d2)/S < Th < 200 \times (t \times d2)/S \quad (3).$$

Patent Literature 3 discloses a spot-welding method for improving cross tensile strength of a spot-welded joint, the method including the following steps of: forming a fusion zone by overlapping a plurality of steel sheets including a high-strength steel sheet having a tensile strength of from 750 to 2500 MPa and a predetermined carbon equivalent Ceq of from 0.20% to 0.55% by mass and by main welding; performing a first cooling/post-energization during which energization is paused, the steel sheets are cooled to form a solidified area in the fusion zone, and then sequentially post-energization is performed to prevent re-fusion of the solidified area; and then after the termination of the step of performing the first cooling/post-energization, carrying out once or more a step of performing cooling/post-energization by pausing energization for cooling time $t_S$ (ms) to satisfy predetermined conditions while maintaining a predetermined pressurizing force $F_E$ (N), and then sequentially performing post-energization at a post-energization current $I_P$ (kA) for post-energization time $t_P$ (ms) to prevent re-fusion of the solidified area.

In addition, Patent Literature 4 to 6 also disclose a spot-welding method in which post-energization is performed after main energization.

Patent Literature 1: Japanese Patent Publication (JP-B) No. 5895430
Patent Literature 2: JP-B No. 5891741
Patent Literature 3: JP-B No. 6409470
Patent Literature 4: WO2016/139952
Patent Literature 5: Japanese Patent Application Laid-Open (JP-A) No. 2018-30178
Patent Literature 6: JP-A No. 2013-78782

SUMMARY OF INVENTION

Technical Problem

An object of the disclosure is to provide a method of producing a spot-welded joint, by which the cross tensile strength of a joint can be effectively improved using a high-strength steel sheet, compared with a method of producing a spot-welded joint by performing post-energization once after main welding, and such a spot-welded joint.

Solution to Problem

The gist of the present disclosure to achieve the above object is as follows.

<1> A method of producing a spot-welded joint comprising performing spot-welding by clamping a sheet combination of a plurality of overlapped steel sheets with a pair of welding electrodes in a sheet thickness direction and energizing the sheet combination in a pressurized state,

wherein at least one of the plurality of steel sheets is a high-strength steel sheet whose carbon equivalent Ceq represented by the following Formula (A) is 0.36% by mass or more, provided that [C], [Si], [Mn], [P], and [S] denote contents of C, Si, Mn, P, and S, respectively, in terms of % by mass:

$$Ceq = [C]+[Si]/30+[Mn]/20+2[P]+4[S] \quad (A),$$

the performing spot-welding comprising:

a main welding step of performing main welding for forming a fusion zone in the sheet combination by energizing the pair of welding electrodes with a main welding current value $I_{w0}$ (kA) while pressurizing the sheet combination with the pair of welding electrodes at a pressurizing force $F_E$ (N) that satisfies the following Formula (B):

$$2000 \times h \leq F_E \leq 4500 \times h \quad (B),$$

provided that h (mm) denotes an arithmetic mean value of sheet thicknesses of the plurality of steel sheets; and
a post-energization step of performing energization two times after the main welding step,
wherein a first post-energization step corresponding to the post-energization step performed for a first time is to perform energization at a first post-energization current value $I_{w1}$ (kA) that satisfies the following Formula (D) for a time $t_{w1}$ (ms) that satisfies the following Formula (E) following no-energization during which energization is paused for a time $t_{c1}$ (ms) that satisfies the following Formula (C) after the main welding step:

$$2 \leq t_{c1} \leq 300 \quad (C);$$

$$0.75 \times I_{w0} < I_{w1} < I_{w0} \quad (D);$$

$$t_{w1} > 100 \quad (E),$$

wherein a second post-energization step corresponding to the post-energization step performed for a second time is to perform energization at a second post-energization current value $I_{w2}$ (kA) that satisfies the following Formulas (G1) and (H1) for a time $t_{w2}$ (ms) following no-energization during which energization is paused for a time $t_{c2}$ (ms) that satisfies the following Formula (F1) after the first post-energization step:

$$2 \le t_{c2} \le 300 \quad (F1);$$

$$0.004 \times t_{c2}^2 - 0.3125 \times t_{c2} + 102 \le I_{w2}/I_{w0} \times t_{w2} \le 0.0156 \times t_{c2}^2 - 0.625 \times t_{c2} + 300$$

$$(G1);$$

$$0.75 \times I_{w0} < I_{w2} \quad (H1),$$

and

wherein steps from the main welding step to a final post-energization step are performed sequentially while maintaining the pressurizing force $F_E$ (N) within a range that satisfies the Formula (B).

<2> The method of producing a spot-welded joint according to <1>, wherein a relationship between the main welding current value $I_{w0}$ and the second post-energization current value $I_{w2}$ satisfies the following Formula (I):

$$I_{w2} > I_{w0} \quad (I).$$

<3> The method of producing a spot-welded joint according to <1> or <2>, the performing spot-welding comprising performing the post-energization step three to N times (N is an integer of 3 or more), wherein an nth post-energization step (n is an integer from 3 to N) corresponding to the post-energization step for a third or subsequent time is to perform energization at an nth post-energization current value $I_{wn}$ (kA) that satisfies the following Formulas (G) and (H) for a time $t_{wn}$ (ms) following no-energization during which energization is paused for a time $t_{cn}$ (ms) that satisfies the following Formula (F) after an (n-1)th post-energization step corresponding to the post-energization step for an (n-1)th time:

$$2 \le t_{cn} \le 300 \quad (F);$$

$$0.004 \times t_{cn}^2 - 0.3125 \times t_{cn} + 102 \le I_{wn}/I_{w0} \times t_{wn} \le 0.0156 \times t_{cn}^2 - 0.625 \times t_{cn} + 300$$

$$(G);$$

$$0.75 \times I_{w0} < I_{wn} \quad (H).$$

<4> A spot-welded joint comprising a spot-weld zone in which a plurality of overlapped steel sheets are joined,

wherein at least one steel sheet of the plurality of steel sheets is a high-strength steel sheet whose carbon equivalent Ceq represented by the following Formula (A) is 0.36% by mass or more, provided that [C], [Si], [Mn], [P], and [S] denote contents of C, Si, Mn, P, and S, respectively, in terms of % by mass:

$$Ceq = [C] + [Si]/30 + [Mn]/20 + 2[P] + 4[S] \quad (A),$$

wherein, when an inside of a fusion boundary of a nugget in the spot-weld zone is observed on a cross-section in a sheet thickness direction passing through a center of the nugget, a proportion of crystal grains having an aspect ratio of 7 or more is 50% or less in a middle portion in a long axis direction of the nugget, provided that a portion with a crystal orientation difference of 15 degrees or more is defined as a crystal grain boundary.

Advantageous Effects of Invention

According to the disclosure, a method of producing a spot-welded joint, by which the cross tensile strength of a joint can be effectively improved, compared with a method of producing a spot-welded joint by performing post-energization once after main welding, and such a spot-welded joint, can be provided.

BRIEF DESCRIPTION OF DRAWINGS

Fig. 1 is a schematic diagram illustrating an example of the arrangement of two steel sheets and welding electrodes when starting resistance spot-welding on a sheet combination of two overlapped steel sheets.
Fig. 2 is a schematic diagram illustrating an example of a nugget and a heat-affected zone (HAZ) formed when resistance spot-welding is performed on a sheet combination of two overlapped steel sheets.
Fig. 3 is a diagram illustrating an example of an energization pattern in the method of producing a spot-welded joint according to the disclosure.
Fig. 4 is a diagram illustrating a simulation of the temperature history of a weld zone in the method of producing a spot-welded joint according to the disclosure.
Fig. 5 is a diagram illustrating another example of an energization pattern in the method of producing a spot-welded joint according to the disclosure.
Fig. 6 is a diagram illustrating a region for measuring the aspect ratio of crystal grains in a weld zone of a spot-welded joint.
Fig. 7 is a diagram illustrating the relationship with Formula (G1) for each example in which the second post-energization conditions are changed.
Fig. 8 is a diagram illustrating fine grain regions of crystal grains formed near the center of the nugget for spot-welded joints according to the examples in Fig. 7.

DESCRIPTION OF EMBODIMENTS

Hereinafter, an embodiment that is an example of the disclosure will be described.
In the disclosure, the "%" sign for the content of each element means "% by mass." Unless otherwise specified, a numerical range expressed using "to" means a range including the numerical values before and after "to" as the lower and upper limits in the disclosure. In a case in which the numerical range described before and after "to" is followed by "more than" or "less than," it means that the numerical range does not include the numerical value as the lower limit or upper limit.
In the numerical ranges described in a stepwise manner in the disclosure, the upper limit value of one stepwise numerical range may be replaced by the upper limit value of another stepwise numerical range, or may be replaced by a value shown in the Examples. In the numerical ranges described in a stepwise manner in the disclosure, the lower limit value of one stepwise numerical range may be replaced by the lower limit value of another stepwise numerical range, or may be replaced by a value shown in the Examples.
The term "step" includes not only an independent step but also a step that cannot be clearly distinguished from other steps as long as the intended purpose of the step is achieved.
The inventors of the disclosure made intensive studies on a method of effectively improving joint strength for producing a spot-welded joint by spot-welding a sheet combination including a high-strength steel sheet having a tensile strength of, for example, 900 MPa or more. As a result, the inventors found that the joint strength can be effectively improved by performing post-energization for a plurality of times (at least two times) after main welding under pressurization at a predetermined pressurizing force $F_E$ (N) corresponding to the sheet thickness of the high-strength steel sheet, during which the current value is set to be smaller than that of main welding in the first post-energization, and the second post-energization is performed with a current value and an energization time that satisfies a predetermined relationship with the immediately preceding cooling time and the current value of main welding.
Moreover, as a result of observation of the steel structure of a spot-weld zone produced by the method of producing a spot-welded joint according to the disclosure, it was found that the equiaxed grain refinement of crystal grains inside the nugget has been promoted, and the crystal grain morphology is different from the case in which spot-welding was performed only by main welding or the case in which tempering energization or the like was performed after main welding.
Hereinafter, the embodiment of the disclosure will be described.

[High-strength Steel Plate]

First, a high-strength steel sheet included in a sheet combination that is subjected to spot-welding in the method of producing a spot-welded joint according to the disclosure will be described.

(Tensile Strength)

As long as the tensile strength of each of a plurality of steel sheets in a sheet combination that is subjected to spot-welding is, for example, less than 900 MPa, higher joint strength tends to be obtained, and a problem related to joint strength is unlikely to occur. Therefore, a sheet combination of a plurality of overlapped steel sheets including at least one high-strength steel sheet having a carbon equivalent "Ceq" described later of 0.36% by mass or more (sometimes simply referred to as "high-strength steel sheet" in the disclosure) is used in the method of producing a spot-welded joint according to the disclosure.

The plurality of steel sheets constituting the sheet combination may each be a high-strength steel sheet having a carbon equivalent Ceq of 0.36% by mass or more. Alternatively, at least one of them may be a high-strength steel sheet having a carbon equivalent Ceq of 0.36% by mass or more and at least another one of them may be a steel sheet having a carbon equivalent Ceq of less than 0.36% by mass. For example, in the case of a sheet combination of three or more steel sheets overlapped with each other, at least one of the steel sheets need only be a high-strength steel sheet, and one or more steel sheets having a carbon equivalent Ceq of less than 0.36% by mass may be included.

The plurality of steel sheets constituting the sheet combination in the disclosure may be, but are not limited to flat steel sheets, steel sheets processed by hot stamping (hot press) or the like. For example, the sheet combination may be made by overlapping a plurality of steel sheets processed into a three-dimensional part shape by bending or the like or may be made by overlapping a flat steel sheet and a steel sheet processed into the part shape. For example, in the case of performing spot-welding using a steel member having a three-dimensional shape obtained by processing, such as bending or welding, a flat steel sheet, the flat portion (sheet-shaped portion) on which spot-welding is performed corresponds to the "steel sheet" in the disclosure.

The tensile strength of the high-strength steel sheet is preferably 900 MPa or more, and there is no particular upper limit. However, when the tensile strength is excessively high, defects and cracks are more likely to occur inside a nugget. Therefore, the tensile strength of the high-strength steel sheet is preferably 2500 MPa or less.

The tensile strength (TS) of a steel sheet may be measured by sampling a JIS No. 5 tensile test piece (gage length: 50 mm; width 25 mm) from the steel sheet and pulling a sample at a tensile speed of 10 mm/min in accordance with ISZ 2241:2011. In the case of sampling from a joint, an area that has been deformed by a press or the like should be avoided, and sampling should be done from a flat area. In a case in which a JIS No. 5 tensile test piece cannot be sampled, TS may be measured using a JIS No. 13B (gage length: 50 mm; width: 12.5 mm).

(Carbon Equivalent Ceq)

The high-strength steel sheet in the disclosure has a carbon equivalent Ceq represented by the following Formula (A) of 0.36% by mass or more.

$$Ceq = [C] + [Si]/30 + [Mn]/20 + 2[P] + 4[S] \quad (A)$$

In Formula (A), [C], [Si], [Mn], [P], and [S] are the contents (% by mass) of C, Si, Mn, P, and S contained in the high-strength steel sheet, respectively.

As long as the carbon equivalent Ceq is 0.36% by mass or more, the tensile strength of the high-strength steel sheet can be, for example, 900 MPa or more.

The upper limit of carbon equivalent Ceq is not particularly limited. For example, when it exceeds 0.55% by mass, a high-strength steel sheet having a tensile strength exceeding 2500 MPa can be obtained. On the other hand, it is difficult to improve the CTS of a spot-welded joint. Therefore, the Ceq of the high-strength steel sheet is preferably 0.55% by mass or less.

In a case in which the sheet combination includes a steel sheet having a tensile strength of, for example, less than 900 MPa, the Ceq of the steel sheet is not particularly limited and thus may be less than 0.36% by mass.

The analysis of the chemical composition of the steel sheet may be carried out by any chemical analysis method known to those skilled in the art, for example, inductively coupled plasma mass spectrometry (ICP-MS method). Note that C and S may be measured using the combustion-infrared absorption method, and N may be measured using the inert gas fusionthermal conductivity method. These analyses may be carried out on samples taken from the steel sheet by the method in accordance with JIS G0417:1999.

(Chemical Composition)

The high-strength steel sheet in the disclosure may have a chemical composition that results in a carbon equivalent Ceq of 0.36% by mass or more. Hereinafter, a preferred chemical composition of the high-strength steel sheet in the disclosure will be described.

C: from 0.07% to 0.50%

C is an element that increases the tensile strength of steel. The greater the C content in the steel, the greater the strength of the nugget can be. When the C content in the steel is 0.07% or more, a tensile strength of 900 MPa or more is easily obtained. Meanwhile, when the C content in the steel is 0.50% or less, the deterioration of the workability of the high-strength steel sheet can be suppressed. Therefore, the C content in the high-strength steel sheet is preferably from 0.07% to 0.50%.

Si: from 0.001% to 2.50%

Si is an element that increases the strength of steel through solid-solution strengthening and structural strengthening. When the Si content in the steel is 2.50% or more, deterioration in the workability of the steel can be suppressed. When the Si content in the steel is 0.001% or more, it facilitates the manufacturing industrially or technically. Therefore, the Si content in the high-strength steel sheet is preferably from 0.001% to 2.50%.

Mn: from 0.8% to 5.0%

Mn is an element that increases the strength of steel. When the Mn content in the steel is 5.0% or less, deterioration in the workability of the steel can be suppressed. Meanwhile, when the Mn content in the steel is 0.8% or more, a tensile strength of 900 MPa or more is easily obtained. Therefore, the Mn content in the high-strength steel sheet is preferably 0.8% to 5.0%.

P: 0.03% or less

P is an element that embrittles a nugget. When the P content in steel is 0.03% or more, cracks are less likely to occur in the nugget, and sufficiently high joint strength is likely to be obtained. Therefore, the P content in the high-strength steel sheet is preferably 0.03% or less. Although there is no lower limit for the P content, from the viewpoint of suppressing an increase in the production cost, the P content in the high-strength steel sheet may be 0.001% or more.

S: 0.01% or less

S is an element that embrittles a nugget. S is an element that binds to Mn to form coarse MnS, which impairs the workability of steel. When the S content in steel is 0.01% or less, cracks are less likely to occur in the nugget, and sufficiently high joint strength is likely to be obtained. In addition, the workability of the steel is improved. Therefore, the S content in the high-strength steel sheet is preferably 0.01% or less. From the viewpoint of suppressing an increase in the production cost, the S content in the high-strength steel sheet may be 0.0001% or more.

N: 0.01% or less

N is an element that forms a coarse nitride and deteriorates the workability of steel. N is also an element that can cause blowholes during welding. To suppress deterioration of the workability of the steel and the occurrence of blowholes, the N content in the high-strength steel sheet is preferably 0.01% or less. From the viewpoint of suppressing an increase in the production cost, the N content in the high-strength steel sheet may be 0.0005% or more.

O: 0.01% or less

O is an element that forms an oxide and deteriorates the workability of steel. From the viewpoint of suppressing deterioration of the workability of the steel, the O content in the high-strength steel sheet is preferably 0.01% or less. From the viewpoint of suppressing an increase in the production cost, the O content in the high-strength steel sheet may be 0.0005% or more.

Al: 1.50% or less

Al is a ferrite-stabilizing element and has the effect of suppressing cementite precipitation during bainite transformation. For this reason, Al is contained to control the steel structure. Al also functions as a deoxidizer. Meanwhile, Al is easily oxidized, and the increase in inclusions leads to a deterioration in the workability of the steel. Therefore, the Al content in the high-strength steel sheet is preferably 1.50% or less.

In addition to the above main elements, the high-strength steel sheet may selectively contain the following elements, if necessary.

Ti, Nb, V: from 0.005% to 0.20%

Ti, Nb, and V are elements that contribute to increasing the strength of steel by at least one of precipitation strengthening, fine grain strengthening by suppressing the growth of ferrite crystal grains, and dislocation strengthening by suppressing recrystallization. However, when the content of any of these elements in the steel is less than 0.005%, the effect of including these elements is unlikely to be exhibited. Meanwhile, when the content in the steel is 0.20% or less, the impairment of the workability of the steel can be suppressed. Therefore, the content of any of these elements in the high-strength steel sheet is preferably from 0.005% to 0.20%.

B: from 0.0001% to 0.01%

B is an element that controls the steel structure and strengthens steel. However, when the B content in the steel is less than 0.0001%, the effect of including B is unlikely to be exhibited. Meanwhile, when the content of B in the steel exceeds 0.01%, the effect of including B is saturated. Therefore, the B content in the high-strength steel sheet is preferably from 0.0001% to 0.01%.

Cr: from 0.01% to 2.0%
Ni: from 0.01% to 2.0%
Cu: from 0.01% to 2.0%
Mo: from 0.01% to 0.8%

Cr, Ni, Cu, and Mo are elements that contribute to improving the strength of steel. These elements can be used, for example, to replace part of Mn (a strength-improving element). However, any of these elements is likely to contribute to improving strength as long as its content in the steel is 0.01% or more.

Therefore, the content of any of these elements in the high-strength steel sheet is preferably 0.01% or more. Meanwhile, when the contents of Cr, Ni, and Cu in the steel are 2.0% or less, problems occurring during pickling or hot working can be suppressed when the Mo content in the steel exceeds 0.8%. Therefore, the Cr, Ni, and Cu contents in the high-strength steel sheet are preferably 2.0% or less. In addition, the Mo content in the high-strength steel sheet is preferably 0.8% or less.

At least one kind of Ca, Mg, or REM: from 0.0001% to 1.0% in total

Ca, Mg, and a rare earth metal (REM) are elements that reduce the size of an oxide after deoxidation and the size of a sulfide present in a hot-rolled steel sheet, thereby contributing to improving the workability of steel. When the total content of these elements in the steel is 0.0001% or more, the effect of including them is easily exhibited. Meanwhile, when the total content of these elements in the steel is 1.0% or less, deterioration in the workability of the steel is suppressed. Therefore, the total content of these elements in the high-strength steel sheet is preferably from 0.0001% to 1.0%.

REM is a general term for 17 elements in total, including Sc, Y, and 15 elements belonging to the lanthanide series. REM can be added to molten steel as a misch metal during steelmaking. In addition, the lanthanide series elements may be contained in a composite form.

The balance other than the above elements in the high-strength steel sheet is Fe and impurities. Impurities include, for example, components contained in raw materials such as ores and scraps, or components mixed in during the production process, and refer to components that are not purposely contained in the steel sheet.

Each of the above-described Cr, Ni, Cu, Mo, B, Ti, Ni, and V is permitted to be contained as an impurity in a trace amount less than the lower limit value. In addition, Ca, Ce, Mg, La, and REM are also permitted to be contained as impurities in trace amounts less than the lower limit value of the total amount thereof.

The chemical composition of the high-strength steel sheet in the disclosure has been described above. However, in a case in which a steel sheet having a carbon equivalent Ceq of less than 0.36% by mass is included as a steel sheet constituting a sheet combination, the chemical composition and tensile strength of the steel sheet are not particularly limited.

(Steel Structure)

The steel structure (steel type) of the high-strength steel sheet is not particularly limited as long as the carbon equivalent Ceq is 0.36% by mass or more. For example, it may be any type of structure (steel type), such as two-phase structure type (e.g., a structure containing martensite in ferrite or a structure containing bainite in ferrite), processing-induced transformation type (a structure containing retained austenite in ferrite), quenching type (martensite structure), or fine crystal structure type (a structure containing mainly ferrite).

In a case in which a steel sheet having a carbon equivalent Ceq of less than 0.36% by mass is included as a steel sheet constituting a sheet combination, the steel structure (steel type) of the steel sheet is not particularly limited.

(Sheet Thickness)

The sheet thickness of the high-strength steel sheet in the disclosure is not particularly limited. For example, the sheet thickness may be approximately the same as that of high-strength steel sheets (0.5 mm to 3.2 mm) that are generally used for automobile bodies and the like. Note that since stress concentration around the nugget increases with an increase in the sheet thickness of the high-strength steel sheet, the sheet thickness of the high-strength steel sheet is preferably 2.6 mm or less.

In a case in which a steel sheet having a carbon equivalent Ceq of less than 0.36% by mass is included as a steel sheet constituting a sheet combination, the sheet thickness of the steel sheet is not particularly limited.

In addition, the sheet thicknesses of a plurality of steel sheets constituting a sheet combination may be the same or different from each other. For example, in a case in which three or more steel sheets are overlapped, the thicknesses of the steel sheets may be different from each other, or at least two of the steel sheets may have the same thickness.

(Plating)

The steel sheets constituting the sheet combination may have a plating layer formed on the surface. Examples of the types of plating layers include Zn-based, Zn-Fe-based, Zn-Ni-based, Zn-Al-based, Zn-Mg-based, Pb-Sn-based, Sn-Zn-based, and Al-Si-based plating layers. When a plating layer is present on the surface of the steel sheet, the plating layer may be a single layer or multiple plating layers.

Examples of a steel sheet having a Zn-based plating layer include alloyed hot-dip galvanized steel sheets, hot-dip galvanized steel sheets, and electrolytic galvanized steel sheets. As long as a plating layer is formed on the surface of the steel sheets of the sheet combination, the spot-welded joint after spot-welding exhibits excellent corrosion resistance. In a case in which the plating layer is a galvanized layer formed by alloying the surface of the steel sheet, excellent corrosion resistance is obtained, and the adhesion of paint becomes excellent.

The coating amount of the plating layer is not particularly limited. The plating layer may be formed on only one side or on both sides of the steel sheet. An inorganic or organic coating (e.g., a lubricating coating) may be formed on the surface of the plating layer.

[Method of Producing Spot-welded Joint]

Next, the method of producing a spot-welded joint according to the disclosure will be described.

In the method of producing a spot-welded joint according to the disclosure, under pressurization with a pair of welding electrodes at a pressurizing force $F_E$ (N) so as to satisfy Formulas (B) to (H) described later, the main welding step of forming a fusion zone in a sheet combination, in which a plurality of steel sheets including at least one high-strength steel sheet described above are overlapped, is performed, and the post-energization step is performed at least two times after the main welding step sequentially on the sheet combination.

Here, an example of spot-welding two overlapped steel sheets including at least one high-strength steel sheet described above will be described. Spot-welding can be performed by the same method described below also in the case of spot-welding three or more steel sheets including at least one high-strength steel sheet.

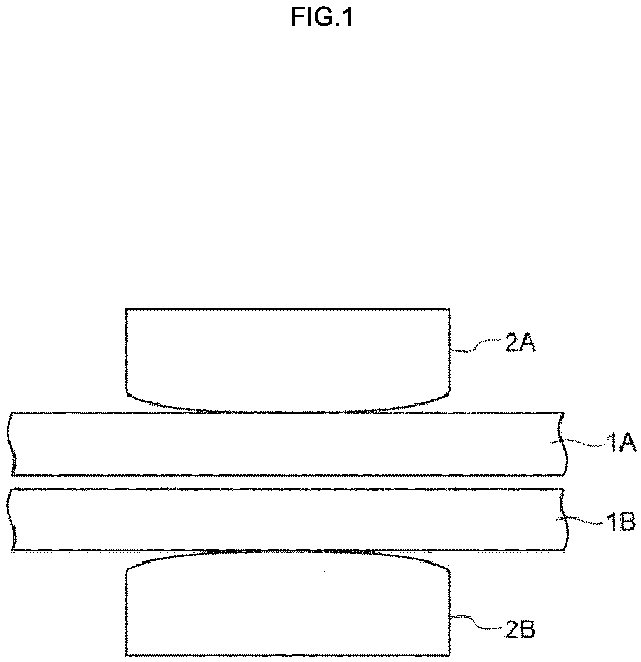

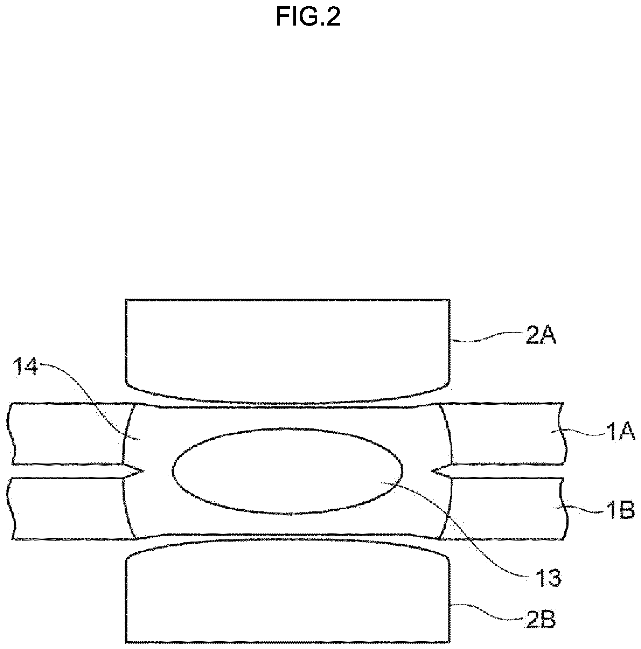

Fig. 1 schematically illustrates an example of the arrangement of two steel sheets including at least one high-strength steel sheet and welding electrodes when starting spot-welding. Fig. 2 schematically illustrates an example of a nugget and a heat-affected zone (HAZ) formed by spot-welding.

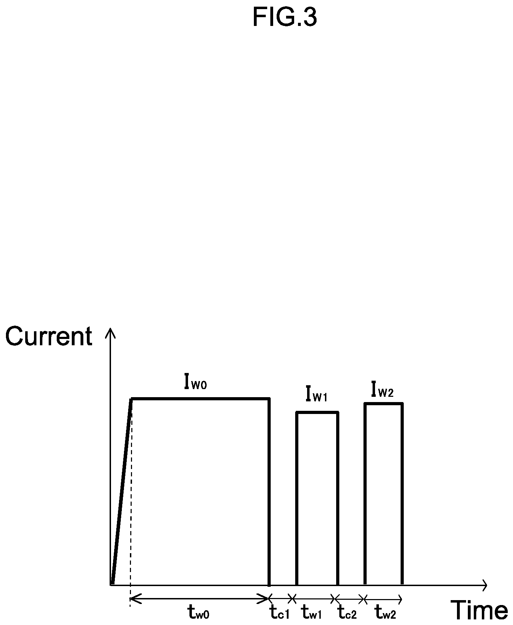

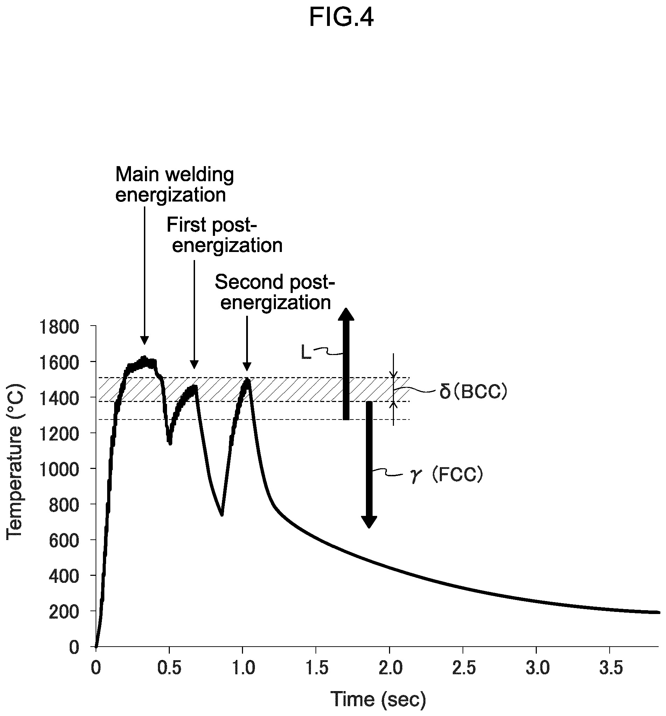

Fig. 3 is a diagram illustrating an example of an energization pattern when energizing welding electrodes in the method of producing a spot-welded joint according to the disclosure. The current described below is a current flowing between welding electrodes 2A and 2B. Further, Fig. 4 is a diagram illustrating a simulation of the temperature history of a weld zone in the method of producing a spot-welded joint according to the disclosure. As software for performing a simulation using thermal conduction analysis, QuickSpot (Research Center of Computational Mechanics, Inc.) can be used.

[Main Welding Step]

First, as illustrated in Fig. 1, a sheet combination in which steel sheets 1A and 1B are overlapped such that their sheet surfaces face each other is prepared and then clamped between a pair of welding electrodes 2A and 2B in the sheet thickness direction. The welding electrodes 2A and 2B are energized at a main welding current value $I_{w0}$ (kA) under pressurization with a pressurizing force $F_E$ (N) that satisfies the following Formula (B), and main welding (main energization) for forming a fusion zone in the sheet combination is performed. At least one of the steel sheets 1A and 1B is the above-described high-strength steel sheet.

$$2000 \times h \leq F_E \leq 4500 \times h \quad (B)$$

Here, h (mm) refers to the arithmetic mean value of sheet thicknesses of a plurality of overlapped steel sheets.

In a case in which the sheet thicknesses of two steel sheets are different, the arithmetic mean value of the sheet thicknesses of two steel sheets (arithmetic mean value of sheet thicknesses of steel sheets 1A and 1B) is used as "h" in Formula (B). In the case of spot-welding three or more steel sheets, the sum of the sheet thicknesses of the plurality of steel sheets is calculated, and the sum is divided by the number of sheets in the sheet combination, and the resultant value is used as "h" in Formula (B).

In the case of measuring the sheet thicknesses of steel sheets before they are joined by spot-welding, the arithmetic mean value h of the sheet thickness may be determined by measuring the thickness of each steel sheet and taking the arithmetic mean value thereof as h. In the case of measurement by overlapping steel sheets to be joined, it is necessary to measure without any gaps. Therefore, in a case in which there is any warping or floating, the sheets should be clamped or the like to measure, and the measurement result should be divided by the number of overlapped sheets to obtain h. In the case of measurement using a welded joint, it is desirable to measure the sheet thickness at a location that is least deformed by welding. In a case in which it is not possible to measure using a caliper or the like, measurement may be carried out by cross-sectional observation.

The pressurizing force $F_E$ applied by the welding electrodes 2A and 2B to the sheet combination of steel sheets 1A and 1B significantly affects the occurrence of defects and cracks inside the nugget 13 and in the heat-affected zone 14. When the pressurizing force $F_E$ is less than "2000 × h" (N), it becomes difficult to suppress the occurrence of defects and cracks inside the nugget 13 and in the heat-affected zone 14.

Meanwhile, when the pressurizing force $F_E$ exceeds "4500 × h" (N), the regions with which the welding electrodes 2A and 2B come into contact are significantly recessed in the steel sheets 1A and 1B. This not only impairs the appearance but also reduces the joint strength. In addition, in order to obtain a pressurizing force $F_E$ exceeding "4500 × h" (N), a welding gun (a device that applies pressurizing force to the welding electrodes 2A and 2B for energization) needs to have a highly rigid robot arm. Therefore, the pressurizing force $F_E$ of the welding electrodes 2A and 2B applied to the steel sheets 1A and 1B is set from "2000 × h" (N) to "4500 × h" (N) in the disclosure.

The main welding current $I_{w0}$ and the main welding energization time $t_{w0}$ (a time during which the main welding current $I_{w0}$ flows) may be conditions that allow the formation of a fusion zone that will serve as a nugget for joining all steel sheets constituting a sheet combination. The welding current and the energization time comparable to the welding current and the energization time conventionally adopted for stably obtaining a nugget having a predetermined size can be adopted as the main welding current $I_{w0}$ and the main welding time $t_{w0}$.

The pressurizing force may be measured using the pressurizing force value displayed by the spot-welding machine in a case in which the machine is equipped with such a device or may be measured using a pressure gauge such as a quartz piezoelectric sensor attached to the transmission shaft so as to be equivalent to the pressurization load on the steel sheet. The current value can be measured using a current monitor called a weld checker or welding ammeter. The measurement method is not specified, but for example, a method may be used in which a toroidal coil is inserted into a circuit through which the current flows during welding and changes in the current value are read.

It is preferable to adopt a main welding current value $I_{w0}$ in the main welding step such that a desired nugget diameter can be obtained, considering the total sheet thickness t of the sheet combination or the like.

For example, given that the sheet thickness of the thinnest steel sheet in the sheet combination is t' (mm), the energization time $t_{w0}$ in the main welding step can be from 10t' - 5 to 10t' + 50 cycles (the unit of time is the number of cycles at 50 Hz in the disclosure) or the like.

From the viewpoint of joint strength and avoiding expulsion, it is best to aim for a nugget diameter of $4\sqrt{t'}$ or more where t' is the sheet thickness of the thin sheet at the interface between the sheets for the thickness of the sheet combination. The nugget diameter is more desirably $5\sqrt{t'}$ or more. In order to form such a nugget diameter of $5\sqrt{t'}$ or more without causing expulsion, a gradual increase (upslope) of from 1 to 80 cycles (50 Hz) may be set before the main welding step.

In the case of performing upslope energization, the current value at the end of the upslope energization is set to the current value $I_{w0}$ (kA) in the main welding step, and the energization time $t_{w0}$ (ms) in the main welding step does not include the time required for the upslope energization. In the current pattern illustrated in Fig. 3, the current value is increased upslope from 0 (zero) until it reaches the main welding current $I_{w0}$ (kA). Thus, main welding is performed at the main welding current $I_{w0}$ (kA).

Before the main welding step, pre-energization may be performed for, for example, from 2 to 80 cycles at a current value lower than that in the main welding step. This pre-energization may be a multi-stage energization, and a no-energization time may be provided in between.

By the main welding step, a fusion zone and a heat-affected zone (so-called HAZ) 14 that will become a nugget 13 at the end of spot-welding are formed in the energized portion between the steel sheets 1A and 1B.

Regarding the spot-welding equipment, conventional general spot-welding equipment can be used as it is. As for the welding electrodes or the like, conventional welding electrodes can be used as they are. The power source is also not particularly limited, and an AC power source, a DC inverter, an AC inverter, or the like can be used.

When the tip diameters of welding electrodes 2A and 2B become excessively large, the surface pressure at the tips of the welding electrodes 2A and 2B decreases. The tip diameters of the welding electrodes 2A and 2B are preferably about from 6 mm to 8 mm.

[First Post-energization Step]

As a post-energization step performed for the first time (first post-energization step), energization is performed at a first post-energization current value $I_{w1}$ (kA) that satisfies the following Formula (D) for time $t_{w1}$ (ms) that satisfies the following Formula (E) following no-energization during which energization is paused for time $t_{c1}$ (ms) that satisfies the following Formula (C) after the main welding step.

$$2 \leq t_{c1} \leq 300 \quad (C)$$

$$0.75 \times I_{w0} < I_{w1} < I_{w0} \quad (D)$$

$$t_{w1} > 100 \quad (E)$$

In other words, energization is performed with the welding electrodes 2A and 2B for a predetermined time at the main welding current $I_{w0}$ such that a fusion zone is formed in the steel sheets 1A and 1B. Then, immediately after the main welding is terminated by setting the current value to 0 (zero), energization is paused for time $t_{c1}$ (ms) that satisfies Formula (C) while maintaining the pressurizing force $F_E$ that was used during the main welding (during energization at the main welding current $I_{w0}$). This causes the fusion zone formed by the main welding to solidify from the outer periphery of the fusion zone (i.e., the boundary of the fusion zone with other regions). In the disclosure, the boundary between the fusion zone and other regions is referred to as a "fusion boundary."

Immediately after the energization at the main welding current $I_{w0}$ is terminated, solidification of the fusion zone begins from the fusion boundary. The fusion zone solidifies to form a nugget 13, and a heat-affected zone 14 is formed outside the fusion boundary.

In a case in which the no-energization time $t_{c1}$ after the main welding step is less than 2 ms, there is a risk that the nugget end will not be solidified before the subsequent post-energization. Meanwhile, in a case in which the no-energization time $t_{c1}$ exceeds 300 ms, there is a risk that the nugget end will be solidified excessively before the subsequent post-energization.

In order to avoid post-energization when the nugget end is insufficiently or excessively solidified and to properly solidify the nugget end, the no-energization time $t_{c1}$ after the main welding step is from 2 ms to 300 ms and preferably from 40 ms to 250 ms.

In the first post-energization step, energization is performed at the first post-energization current value $I_{w1}$ (kA) that satisfies Formula (D) for time $t_{w1}$ (ms) that satisfies Formula (E) following no-energization during which energization is paused for time $t_{c1}$ (ms) that satisfies Formula (C). In other words, the first post-energization current value $I_{w1}$ is set to smaller than the main welding current value $I_{w0}$ in the main welding step and more than $0.75 \times I_{w0}$ at the same time, and the first post-energization time $t_{w1}$ is set to more than 100 ms. Preferably, by performing the first post-energization under such conditions, at least part of the nugget is refused without crossing the fusion boundary created by the main welding step as illustrated in Fig. 4 such that the $\gamma$ phase (fcc crystal structure) formed in the nugget is transformed into a $\delta$ phase (bcc crystal structure) by cooling during the no-energization time $t_{c1}$ after the main welding step.

The first post-energization time $t_{w1}$ in the first post-energization step is set to preferably from 110 ms to 1000 ms and more preferably from 150 ms to 800 ms from the viewpoint of re-fusing the nugget and reducing the time required for spot-welding as a whole.

In terms of work efficiency, it is preferable to maintain the pressurizing force $F_E$ in the first post-energization step at the same value as the pressurizing force $F_E$ in the main welding step. However, the pressurizing force $F_E$ during the no-energization time $t_{c1}$ may be set differently from the pressurizing force $F_E$ in the main welding step within the scope that satisfies Formula (B).

[Second Post-energization Step]

In the method of producing a spot-welded joint according to the disclosure, the post-energization step is performed at least one time as the second or subsequent post-energization step after the first post-energization step.

After the first post-energization step (post-energization step for the first time), in the second post-energization step (post-energization step for the second time), energization is performed at a second post-energization current value $I_{w2}$ (kA) that satisfies the following Formula (G1) for second post-energization time $t_{w2}$ (ms) following no-energization during which energization is paused for time $t_{c2}$(ms) that satisfies the following Formula (F1) after the first post-energization step.

$$2 \leq t_{c2} \leq 300 \quad (F1)$$

$$0.004 \times t_{c2}^2 - 0.3125 \times t_{c2} + 102 \leq I_{w2}/I_{w0} \times t_{w2} \leq 0.0156 \times t_{c2}^2 - 0.625 \times t_{c2} + 300 \quad (G1)$$

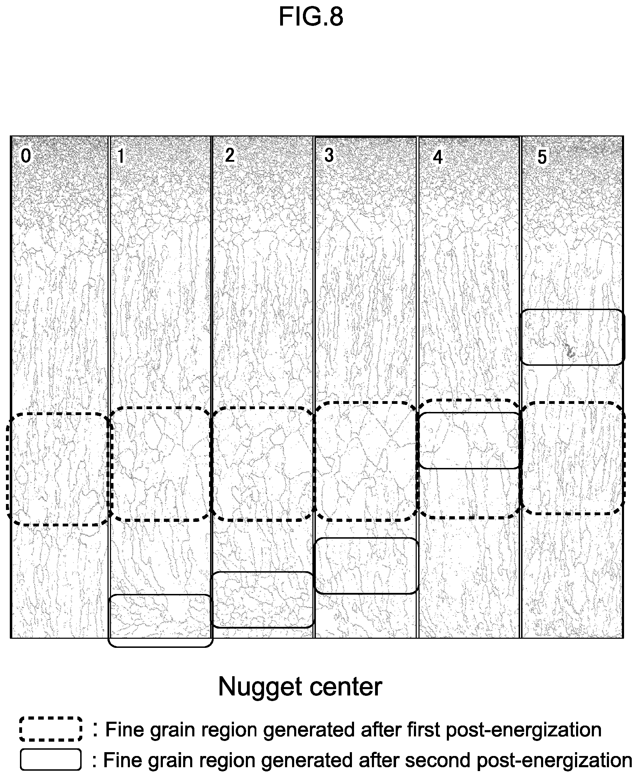

The occurrence or nonoccurrence of a phase transformation due to each post-energization step and the location of the phase transformation can be determined by observing the cross section near the center of the nugget by EBSD as illustrated in Fig. 8, and making the determination based on the fine grain regions of the crystal grains before and after each post-energization step. After forming a fusion zone that will become a nugget by main energization, phase transformation is induced at appropriate positions by performing post-energization two or more times such that the conditions of the disclosure are satisfied, whereby, as described later, a nugget can be formed in which the proportion of grains having an aspect ratio of 7 or more in the vicinity of the center of the nugget is 50% or less.

In a case in which the no-energization time $t_{c2}$ after the first post-energization step is less than 2 ms, there is a risk that the nugget end will not be solidified before the second post-energization step. Meanwhile, in a case in which the no-energization time $t_{c2}$ exceeds 300 ms, there is a risk that the nugget end will be solidified excessively before the first post-energization step.

In order to avoid the second post-energization when the nugget end is insufficiently or excessively solidified and to properly solidify the nugget end, the no-energization time $t_{c2}$ after the first post-energization step is from 2 ms to 300 ms and preferably from 60 ms to 250 ms.

In the second post-energization step, the nugget is cooled during the no-energization time $t_{c2}$ to become the $\gamma$ phase (fcc crystal structure). In addition, post-energization is performed under conditions that allow the second post-energization current value $I_{w2}$ and the second post-energization time $t_{w2}$ to satisfy Formula (G1) with respect to the main welding current value $I_{w0}$ in the main welding step and the no-energization time $t_{c2}$ in the second post-energization step such that the nugget is transformed again into a $\delta$ phase (bcc crystal structure) as illustrated in Fig. 4. This promotes equiaxed grain refinement in the nugget, allowing the CTS to improve.

Further, in the method of producing a spot-welded joint according to the disclosure, similar to the relationship between the main welding current value $I_{w0}$ and the first post-energization current value $I_{w1}$, the current value $I_{w2}$ in the second post-energization step is set to be greater than $0.75 \times I_{w0}$. Energization is performed such that the relationship between the main welding current value $I_{w0}$ and the second post-energization current value $I_{w2}$ (kA) satisfies the following Formula (H1).

$$0.75 \times I_{w0} < I_{w2} \quad (H1)$$

In a case in which the main welding current value $I_{w0}$ and the second post-energization current value $I_{w2}$ do not satisfy the relationship of Formula (H1), even by performing energization for a long time, sufficient heat input cannot be supplied, and the position where equiaxed grain refinement occurs in the nugget remains in the center of the nugget or does not change. Thus, a CTS improvement effect cannot be obtained.

Furthermore, it is preferable that the relationship between the main welding current value $I_{w0}$ and the second post-energization current value $I_{w2}$ satisfies the following Formula (I).

$$I_{w2} > I_{w0} \quad (I)$$

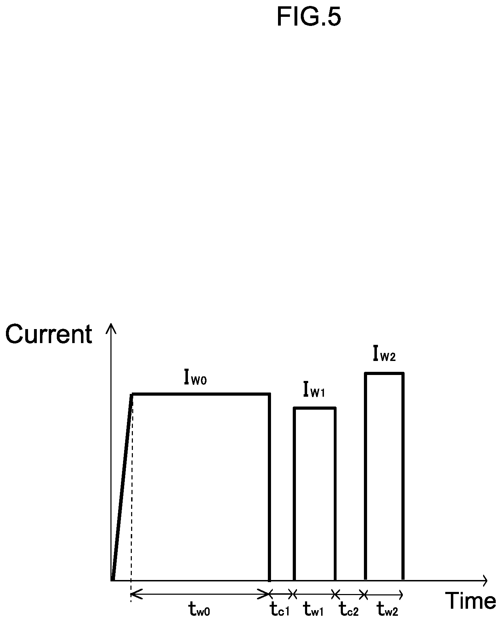

Fig. 5 illustrates an example of the energization pattern that satisfies Formula (I). By setting the second post-energization current value $I_{w2}$ to be greater than the main welding current value $I_{w0}$ as described above, equiaxed grain refinement in the nugget is securely promoted, allowing the CTS to improve.

In a case in which after the second post-energization, the pressurizing force $F_E$ is maintained as is, during which energization is paused, and the post-energization step is terminated after the second time, the pressurizing force $F_E$ created by the welding electrodes 2A and 2B is released from the overlapped steel sheets 1A and 1B (sheet combination). It is preferable to provide a so-called holding time during which only pressurizing force is applied without energization after the second post-energization step. A holding time of 5 cycles (50 Hz) or more is desirable.

In terms of work efficiency, it is preferable to maintain the pressurizing force $F_E$ in the second post-energization step at the same value as the pressurizing force $F_E$ in the main welding step continuously following the first post-energization step. However, the pressurizing force $F_E$ during the no-energization time $t_{c2}$ may be set differently from the pressurizing force $F_E$ in the main welding step within the scope that satisfies Formula (B). In other words, the pressurizing force $F_E$ may be constant or vary within a range that satisfies Formula (B) from the main welding step to the termination of the final post-energization step.

A downslope may be set after the second post-energization step. Due to the downslope, it is possible to further improve the properties of the spot-weld zone by reducing cracks due to liquid metal embrittlement, reducing blowholes, and suppressing delayed fracture.

In the case of performing downslope energization, the current value at the start of downslope energization is set to the second post-energization current value $I_{w2}$(kA) in the second post-energization step, and the second post-energization time $t_{w2}$ (ms) in the second post-energization step does not include the time required for the downslope energization.

By performing resistance spot-welding consisting of the above-described steps on the sheet combination formed by overlapping a plurality of steel sheets including at least one high-strength steel sheet, CTS can be significantly improved, compared with the case of performing resistance spot-welding by single energization. According to the disclosure, it is possible to effectively improve joint strength in a shorter welding time, compared with conventional tempering energization or the like.

Here, the effect of improving CTS by performing energization in the second post-energization step so as to satisfy Formula (G1) above will be described. A sheet combination formed by overlapping two high-strength steel sheets having the chemical composition (unit: % by mass; balance: Fe and impurities), sheet thickness, and tensile strength (TS) in the following Table 1 was subjected to spot-welding by performing main welding energization and post-energization under the conditions listed in Table 2, thereby producing a welded joint. The CTS of the obtained welded joint was measured by a method conforming to JIS Z 3137;1999. In Table 2, "cool" refers to the no-energization time (cooling time) during which energization was paused.

[Table 1]

| Steel sheet | C | Si | Mn | P | S | Al | Ti | B | Ceq | Sheet thickness [mm] | TS [MPa] |
|---|---|---|---|---|---|---|---|---|---|---|---|
| A | 0.20 | 1.20 | 2.30 | 0.015 | 0.0009 | 0.028 | 0.022 | 0.0022 | 0.39 | 1.80 | 1245 |

[Table 2]

| Test Example | Pressurizing force [kN] | Main welding current value [kA] | Main welding energization time [ms] | First cool [ms] | First post-energization current value [kA] | First post-energization time [ms] | Second cool [ms] | Second post-energization current value [kA] | Second post-energization time [ms] | $I_{w2}/I_{w0}*t_{w2}$ | CTS [kN] | CTS improvement rate with respect to CTS after first post-energization [%] | CTS improvement effect |
|---|---|---|---|---|---|---|---|---|---|---|---|---|---|
| | | $I_{w0}$ | $t_{w0}$ | $t_{c1}$ | $I_{w1}$ | $t_{w1}$ | $t_{c2}$ | $I_{w2}$ | $t_{w2}$ | | | | |
| 0 | 4000 | 5.0 | 360 | 80 | 5.0 | 200 | - | - | - | - | 5.5 | | - |
| 1 | 4000 | 5.0 | 360 | 80 | 5.0 | 200 | 80 | 2.0 | 200 | __80__ | 5.6 | __2__ | Not confirmed |
| 2 | 4000 | 5.0 | 360 | 80 | 5.0 | 200 | 80 | 4.0 | 200 | 160 | 6.9 | 25 | Confirmed |
| 3 | 4000 | 5.0 | 360 | 80 | 5.0 | 200 | 80 | 6.0 | 200 | 240 | 7.5 | 36 | Confirmed |
| 4 | 4000 | 5.0 | 360 | 80 | 5.0 | 200 | 80 | 8.0 | 200 | 320 | 6.4 | 16 | Confirmed |
| 5 | 4000 | 5.0 | 360 | 80 | 5.0 | 200 | 80 | 9.0 | 200 | __360__ | 4.8 | __-13__ | Not confirmed |

In Test Example 0, after the main welding energization, the process up to the first post-energization was carried out. Table 2 shows the CTS improvement rates of the joints of Test Examples 1 to 5, which were subjected to the second post-energization, based on the CTS of the joint of Test Example 0. In the case of a CTS improvement rate of more than 10% with respect to single post-energization (Test Example 0), it was judged that the CTS improvement effect was "confirmed." In the case of a CTS improvement rate of 10% or less, it was judged that the CTS improvement effect was "not confirmed."

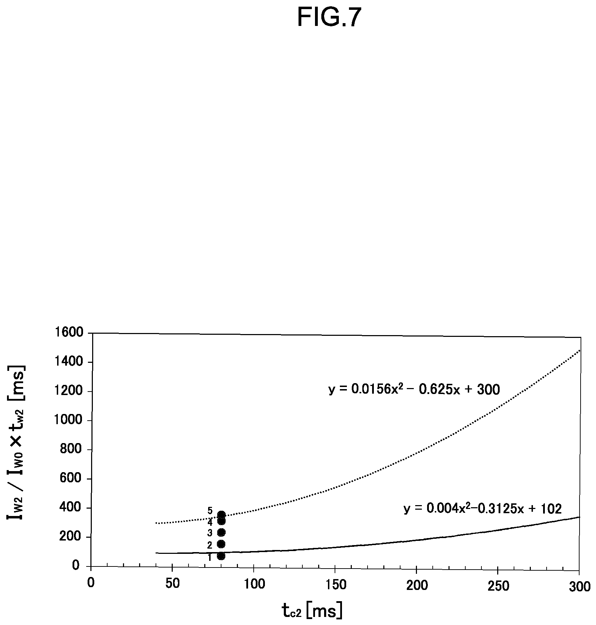

Each joint was cut in the sheet thickness direction so as to pass through the center of the nugget, and the crystal grains near the center of the nugget were observed by electron backscatter diffraction (EBSD). The observation results are shown in Fig. 7. The portion where the crystal orientation difference was 15 degrees or more was determined as the crystal grain boundary. The region enclosed by the dotted square is a fine grain region formed by the first post-energization, and the region enclosed by the solid square is a fine grain region formed by the second post-energization. It is inferred as follows from the results shown in Table 2 and Fig. 7.

The value of $I_{w2}/I_{w0} \times t_{w2}$ is below the lower limit of Formula (G1) in Test Example 1. Thus, the heat input is insufficient. In addition, the fine grains generated by the second post-energization are in the close vicinity of the center of the nugget, which is the position that is reached after considerable crack growth during the joint strength test, failing to contribute to the improvement of joint strength.

The value of $I_{w2}/I_{w0} \times t_{w2}$ satisfies Formula (G1) in Test Examples 2 to 4. Thus, the heat input is appropriate. In addition, the fine grains generated by the second post-energization are at a certain distance from the center of the nugget and are located inside the outermost grains generated by the first post-energization, effectively contributing to the improvement of toughness.

The value of $I_{w2}/I_{w0} \times t_{w2}$ is above the upper limit of Formula (G1) in Test Example 5. The fine grains generated in the first post-energization disappeared because the fine grains generated in the second post-energization were beyond the fine grain region generated in the first post-energization, making it impossible to obtain a high effect of improving joint strength.

(Third or Subsequent Post-energization Step)

In the method of producing a spot-welded joint according to the disclosure, it is possible to further repeat no-energization and post-energization alternately while maintaining the level of pressurizing force $F_E$ as following the second post-energization step so as to carry out the post-energization step for 3 to N times (N is an integer of 3 or more) including the above-described first and second post-energization steps. The relational formulas in the third or subsequent post-energization step are similar to those in the second post-energization step. In other words, after the n-1th (n is an integer of 3 or more) post-energization step, energization is performed at the nth post-energization current value $I_{wn}$ (kA) that satisfies the following Formulas (G) and (H) for the nth post-energization time $t_{wn}$ (ms) following no-energization during which energization is paused for the time $t_{cn}$ (ms) that satisfies the following Formula (F).

The nth post-energization step (n is an integer of 3 or more) corresponding to the second and subsequent post-energization step is to perform no-energization during which energization is paused for time $t_{cn}$ (ms) that satisfies the following Formula (F) after the (n-1)th post-energization step, followed by energization at the nth post-energization current value $I_{wn}$ (kA) that satisfies the following Formula (G) for the nth post-energization time $t_{wn}$ (ms).

$$2 \leq t_{cn} \leq 300 \quad (F)$$

$$0.004 \times t_{cn}^2 - 0.3125 \times t_{cn} + 102 \leq I_{wn}/I_{w0} \times t_{wn} \leq 0.0156 \times t_{cn}^2 - 0.625 \times t_{cn} + 300 \quad (G)$$

In the nth post-energization step, it is preferable to cause the phase transformation to occur inside the outermost position where the phase transformation occurred in the (n-1)th post-energization step.

In the case of performing the post-energization step three or more times, a downslope may be set after the final post-energization step. Due to the downslope, it is possible to further improve the properties of the spot-weld zone by reducing cracks due to liquid metal embrittlement, reducing blowholes, and suppressing delayed fracture.

Also in the case of performing downslope energization after the final post-energization step, the current value at the start of downslope energization is set to the energization current value (kA) in the final post-energization step, and the post-energization time (ms) in the final post-energization step does not include the time required for the downslope energization.

It is considered that when performing post-energization repeatedly following no-energization in the third or subsequent post-energization step so as to satisfy Formulas (F), (G), and (H) as in the second post-energization step, equiaxed grain refinement progresses due to phase transformation from the γ phase (fcc crystal structure) to the δ phase (bcc crystal structure) within the nugget (inside the fusion boundary), resulting in further improvement of CTS. Note that the more post-energization steps there are, the longer the welding time becomes. Therefore, the number of post-energization steps is preferably from 2 to 4, more preferably from 2 to 3, and particularly preferably 2.

<Spot-welded Joint>

According to the method of producing a spot-welded joint according to the disclosure, the following spot-welded joint can be produced. In other words, the spot-welded joint according to the disclosure includes a spot-weld zone in which a plurality of overlapped steel sheets are joined, wherein at least one steel sheet of the plurality of steel sheets is a high-strength steel sheet whose carbon equivalent Ceq represented by the following Formula (A) is 0.36% by mass or more, provided that [C], [Si], [Mn], [P], and [S] denote contents of C, Si, Mn, P, and S, respectively, in terms of % by mass: wherein when an inside of a fusion boundary of a nugget in the spot-weld zone is observed on a cross-section in a sheet thickness direction passing through a center of the nugget, a proportion of crystal grains having an aspect ratio of 7 or more is 50% or less in a middle portion in a long axis direction of the nugget, provided that a portion with a crystal orientation difference of 15 degrees or more is defined as a crystal grain boundary.

$$Ceq = [C] + [Si]/30 + [Mn]/20 + 2[P] + 4[S] \quad (A)$$

The spot-welded joint according to the disclosure can be produced within a shorter period of welding time, compared with a case in which a sheet combination including a high-strength steel sheet having Ceq of 0.36% by mass or more is subjected to main welding and then to tempering energization and can also have a higher joint strength, compared with a spot-welded joint obtained by performing spot-welding only in a main welding step.

(Method of Measuring Proportion of Crystal Grains Having Aspect Ratio of 7 or more)

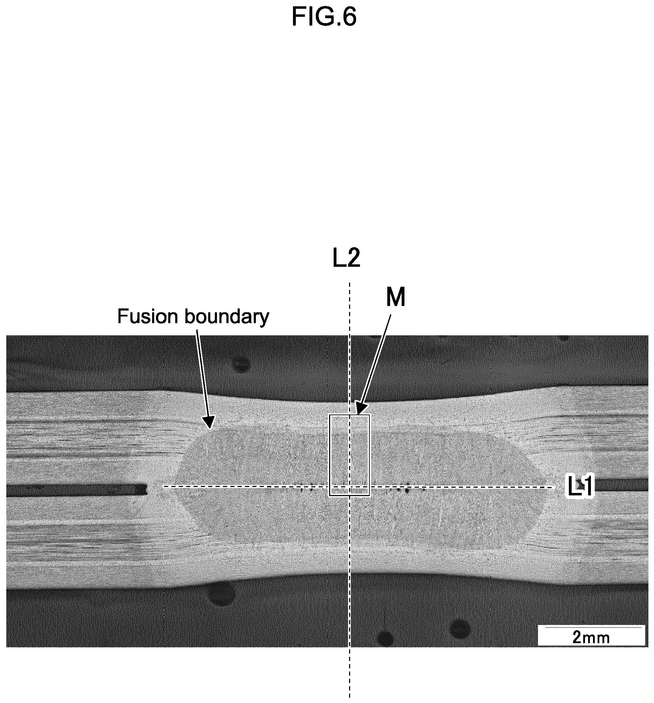

Fig. 6 is a diagram illustrating a region for measuring the aspect ratio of crystal grains in a welded portion of a spot-welded joint. EBSD analysis is used on a cross-section in the sheet thickness direction passing through the center of the nugget in the spot-weld zone to measure the crystal orientation inside the fusion boundary of the nugget. As illustrated in Fig. 6, the measurement field of view is a middle portion M corresponding to an area 0.5 mm to the left and right of a virtual line L2 in the sheet thickness direction passing through the center of the nugget, including the position that was the sheet interface L1 and the fusion boundary of one of the steel sheets. Since the steel structure of the nugget is nearly symmetrical above and below the sheet interface L1, it is sufficient to measure the middle portion M on one sheet side as illustrated in Fig. 6.

Grain boundaries in the measurement field of view, which have a crystal orientation difference of 15 degrees or more and are considered to be block grain boundaries and prior austenite grain boundaries, are drawn to calculate the aspect ratio of each crystal grain. The maximum length of a crystal grain is defined as the major axis, and the distance between two parallel lines that are parallel to the major axis direction and touch the crystal grain at the widest distance is defined as the minor axis, to calculate the aspect ratio (major axis/minor axis). The size of the field of view is not limited because the size of the grain varies depending on the sample, but observation of a size that includes 100 or more grains may be performed. In the above field of view, the aspect ratio values are obtained for 100 or more grains, and the proportion of grains having an aspect ratio of 7 or more is calculated.

For the spot-welded joint according to the disclosure, the proportion of grains having an aspect ratio value of 7 or more measured as described above is 50% or less. In other words, a post-energization step is performed twice or more on the above-described sheet combination including a high-strength steel sheet under the above-described conditions after main welding, thereby promoting equiaxed grain refinement in the nugget. Accordingly, a spot-welded joint in which the proportion of grains having an aspect ratio of less than 7 is half (50%) or more can be obtained. Such a spot-welded joint can exhibit higher CTS, compared with a case in which the proportion of grains having an aspect ratio of 7 or more exceeds 50%.

The ratio of grains having an aspect ratio of 7 or more is preferably 40% or less and more preferably 30% or less.

Examples

Hereinafter, the method of producing a resistance spot-welded joint and the like according to the disclosure will be described with reference to the following Examples. The method of producing a resistance spot-welded joint and the like according to the disclosure are not limited to Examples.

Steel sheets having the following chemical compositions (unit: % by mass; balance: Fe and impurities), sheet thicknesses, and tensile strengths (TS) shown in Table 3 were prepared. In each table in the Examples, underlines indicate items outside the scope of this disclosure.

[Table 3]

| Steel sheet | C | Si | Mn | P | S | Al | Ti | B | Ceq | Sheet thickness [mm] | TS [MPa] |
|---|---|---|---|---|---|---|---|---|---|---|---|
| A | 0.20 | 1.20 | 2.30 | 0.015 | 0.0009 | 0.028 | 0.022 | 0.0022 | 0.39 | 1.80 | 1245 |
| B | 0.44 | 0.22 | 1.12 | 0.013 | 0.0001 | 0.033 | 0.001 | 0.0002 | 0.53 | 1.40 | 2246 |
| C | 0.09 | 2.15 | 3.20 | 0.007 | 0.0008 | 0.031 | 0.040 | 0.0032 | **0.34** | 1.20 | 1012 |
| D | 0.06 | 0.40 | 1.24 | 0.009 | 0.0001 | 0.022 | 0.000 | 0.0001 | **0.15** | 0.60 | **625** |
| E | 0.22 | 1.20 | 2.60 | 0.019 | 0.0019 | 0.025 | 0.025 | 0.0014 | 0.44 | 1.20 | 1240 |

Resistance spot-welding was performed with each combination of steel sheets under the conditions (such as sheet combination, pressurizing force, and energization conditions) listed in Table 4, thereby producing welded joints. CTS was measured for the obtained welded joints.

CTS for the joint of No. 24 in which a three-layer sheet combination was spot-welded was measured in the interface with the target steel sheet in the disclosure (Ceq: 0.36% by mass or more), i.e., the interface between steel sheet B and steel sheet C. The steel sheet D of the sheet combination of No. 24 was prepared for a sheet combination including a high-strength steel sheet to which the method of producing a spot-welded joint according to the disclosure can be applied, and not underlined.

In the case of the joint of the sheet combination in which three steel sheets of the same type were overlapped in No. 25, since two sheet interfaces have the same CTS value, the CTS of either interface may be measured. Here, CTS was measured by performing cross tension on the interface which was the upper side during welding.

CTS (reference CTS) of the welded joint that underwent up to the first post-energization after main welding energization under the conditions of each number was measured for the sheet combination of each number. The rate of increase for each number was determined by comparing with the reference CTS, and those exceeding 10% were determined to have an effect of improving joint strength.

[Table 4]

| No. | 1st sheet | 2nd sheet | 3rd sheet | Pressurizing force [N] | Main welding current value [kA] $I_{w0}$ | Main welding energization time [ms] $t_{w0}$ | 1st cool [ms] $t_{c1}$ | 1st post-energization current value [kA] $I_{w1}$ | 1st post-energization time [ms] $t_{w1}$ | Second cool [ms] $t_{c2}$ | 2nd post-energization current value [kA] $I_{w2}$ | 2nd post-energization time [ms] $t_{w2}$ | $I_{w2}/I_{w0}*t_{w2}$ | Lower limit of Formula (G) | Upper limit of Formula (G) | Proportion of grains having aspect ratio of 7 or more [%] | CTS after 1st post-energization [kN] | CTS [kN] | CTS improvement rate with respect to CTS after first post-energization [%] | Remarks |
|---|---|---|---|---|---|---|---|---|---|---|---|---|---|---|---|---|---|---|---|---|
| 1 | **C** | **C** | - | 3500 | 6.5 | 380 | 60 | 6.2 | 150 | 60 | 7.1 | 150 | 164 | 98 | 319 | 42 | 8.5 | 8.9 | **5** | Comparative Example |
| 2 | A | A | - | **3000** | 8.0 | 420 | 60 | 7.8 | 200 | 80 | 8.3 | 200 | 208 | 103 | 350 | **60** | 7.2 | 7.3 | **1** | Comparative Example |
| 3 | A | A | - | 4000 | 8.0 | 420 | **0** | 7.4 | 180 | 60 | 8.5 | 180 | 191 | 98 | 319 | **67** | 6.8 | 6.6 | **-3** | Comparative Example |
| 4 | A | A | - | 4000 | 8.0 | 420 | 80 | **8.5** | 250 | 60 | 8.3 | 160 | 166 | 98 | 319 | **65** | 6.5 | 6.6 | **2** | Comparative Example |
| 5 | A | A | - | 4000 | 8.0 | 420 | 80 | 7.8 | **80** | 120 | 7.5 | 160 | 150 | 122 | 450 | **62** | 6.5 | 6.7 | **3** | Comparative Example |
| 6 | A | A | - | 4000 | 8.0 | 420 | 60 | 6.7 | 150 | **0** | 7.6 | 240 | 228 | 102 | 300 | **77** | 7.6 | 7.5 | **-1** | Comparative Example |
| 7 | A | A | - | 4000 | 8.0 | 420 | 60 | 6.5 | 150 | 100 | 7.2 | 50 | **45** | 111 | 394 | **75** | 7.9 | 7.9 | **0** | Comparative Example |
| 8 | A | A | - | 4000 | 8.0 | 420 | 60 | 6.3 | 150 | 100 | 8.0 | 400 | **400** | 111 | 394 | **56** | 7.9 | 5.6 | **-29** | Comparative |

| No | | | | | | | | | | | | | | | | | | | | Example |
|----|---|---|---|------|------|-----|-----|------|------|-----|------|-----|-----|-----|-----|-----|-----|------|-----|-----|
| 9 | A | A | - | 4000 | 8.0 | 420 | 60 | 7.4 | 150 | 100 | 5.5 | 400 | 275 | 111 | 394 | 78 | 7.9 | 8.1 | 3 | Comparative Example |
| 10 | A | A | - | 4000 | 8.0 | 420 | 60 | 7.2 | 150 | 100 | 8.3 | 150 | 156 | 111 | 394 | 35 | 7.9 | 10.5 | 33 | Example |
| 11 | A | A | - | 4000 | 8.0 | 420 | 60 | 7.8 | 150 | 100 | 7.6 | 150 | 143 | 111 | 394 | 25 | 7.9 | 9.2 | 16 | Example |
| 12 | A | A | - | 4000 | 8.0 | 420 | 60 | 7.9 | 150 | 100 | 11.1 | 80 | 111 | 111 | 394 | 23 | 7.9 | 10.4 | 32 | Example |
| 13 | A | A | - | 4000 | 8.0 | 420 | 60 | 6.7 | 150 | 100 | 8.1 | 150 | 152 | 111 | 394 / [3rd cool $t_{c3}$ [ms] 60 / 3rd post-energization current value $I_{w3}$ [kA] 8.5 / 3rd post-energization time $t_{w3}$ [ms] 150 / $I_{w3}/I_{w0}*t_{w3}$ 159] | 111 | 319 | 34 | 7.9 | 11.1 | 41 | Example |
| 14 | B | B | - | 6000 | 10.5 | 420 | - | - | - | - | - | - | - | - | - | 89 | ※3.7 | 2.5 | -32 | Comparative Example |
| 15 | B | B | - | 6000 | 10.5 | 420 | 800 | 5.5 | 1400 | - | - | - | - | - | - | 87 | ※3.7 | 4.7 | 27 | Comparative Example |
| 16 | B | B | - | 6000 | 10.5 | 360 | 80 | 9.5 | 320 | 40 | 12.7 | 100 | 121 | 96 | 300 | 43 | 3.7 | 4.1 | 11 | Example |
| 17 | B | B | - | 6000 | 10.5 | 360 | 80 | 9.5 | 320 | 40 | 11.2 | 180 | 192 | 96 | 300 | 34 | 3.7 | 4.4 | 19 | Example |
| 18 | E | E | - | 3000 | 6.6 | 400 | 80 | 6.1 | 40 | 80 | 6.9 | 100 | 105 | 103 | 350 | 67 | 5.8 | 6.2 | 7 | Comparative Example |
| 19 | E | E | - | 3000 | 6.6 | 400 | 180 | 6.1 | 40 | 180 | 7.1 | 100 | 108 | 175 | 693 | 55 | 5.8 | 6.3 | 9 | Comparative Example |
| 20 | E | E | - | 3000 | 6.6 | 400 | 240 | 6.1 | 100 | 240 | 5.5 | 200 | 167 | 257 | 1049 | 67 | 5.8 | 5.5 | -5 | Comparative Example |
| 21 | E | E | - | 3000 | 6.6 | 400 | 80 | 6.1 | 110 | 80 | 4.9 | 250 | 186 | 103 | 350 | 75 | 5.8 | 5.7 | -2 | Comparative Example |
| 22 | E | E | - | 3000 | 6.6 | 400 | 240 | 6.1 | 110 | 240 | 4.1 | 100 | 62 | 257 | 1049 | 66 | 5.8 | 6.1 | 5 | Comparative Example |
| 23 | A | D | - | 4500 | 7.9 | 500 | 200 | 7.2 | 350 | 200 | 8.1 | 200 | 205 | 200 | 799 | 15 | 5.5 | 7.2 | 31 | Example |
| 24 | B | C | D | 4000 | 7.2 | 500 | 100 | 6.7 | 400 | 100 | 7.2 | 150 | 150 | 111 | 394 | 36 | 3.2 | 3.6 | 13 | Example |
| 25 | B | B | B | 5000 | 10.6 | 600 | 100 | 10.2 | 300 | 100 | 10.8 | 250 | 255 | 111 | 394 | 23 | 4.1 | 4.9 | 20 | Example |

Nos. 1 to 9 underwent up to the second post-energization after main welding energization was performed. However, none of them satisfied any one of Formulas (A) to (H) in the disclosure, and none of them achieved the CTS improvement effect. The proportion of grains having an aspect ratio of 7 or more was 50% or less for No. 1. However, since Ceq of steel sheet C constituting the sheet combination was low and CTS was high even in the joint that underwent up to the first post-energization, the CTS improvement effect due to the second post-energization was not obtained.

No. 14 is an example that was subjected to only main welding energization.

No. 15 is an example in which after main welding energization, long-time post-energization (i.e., tempering energization) was carried out at a relatively small current value for tempering. Although the CTS improvement effect was obtained, it was necessary to prolong the time for the no-energization step after main welding energization. It is difficult to say that the spot-welding step as a whole can effectively improve CTS. The CTS improvement rates of Nos. 14 and 15 were calculated based on a comparison with CTS of the welded joint that underwent up to the first post-energization after main welding energization under the conditions of No. 16 using the same sheet combination (two steel sheets B).

Nos. 18 to 22 underwent up to the second post-energization after main welding energization. However, none of them satisfied Formulas (A) to (H1) in the disclosure. Thus, the CTS improvement effect was obtained for none of them.

All of the numbers classified as Examples satisfy Formulas (A) to (H) in the disclosure, and the CTS improvement effect was obtained

No. 13 is an example that underwent up to the third post-energization, resulting in the highest CTS improvement rate. In Table 4, the no-energization, current value, and time in the third post-energization are shown separately in the column for the second post-energization for convenience.

The disclosure of Japanese Patent Application No. 2022-125100, filed on August 4, 2022, is incorporated herein by reference in its entirety. All publications, patent applications, and technical standards mentioned herein are herein incorporated by reference to the same extent as if each individual publication, patent application, or standard was specifically and individually indicated to be incorporated by reference.

Reference Signs List

1A, 1B Steel sheet
2A, 2B Welding electrode
13 Nugget
14 Heat-affected zone (HAZ)

Claims

1. A method of producing a spot-welded joint comprising performing spot-welding by clamping a sheet combination of a plurality of overlapped steel sheets with a pair of welding electrodes in a sheet thickness direction and energizing the sheet combination in a pressurized state,

wherein at least one of the plurality of steel sheets is a high-strength steel sheet whose carbon equivalent Ceq represented by the following Formula (A) is 0.36% by mass or more, provided that [C], [Si], [Mn], [P], and [S] denote contents of C, Si, Mn, P, and S, respectively, in terms of % by mass:

$$Ceq = [C]+[Si]/30+[Mn]/20+2[P]+4[S] \quad (A),$$

the performing spot-welding comprising:

a main welding step of performing main welding for forming a fusion zone in the sheet combination by energizing the pair of welding electrodes with a main welding current value $I_{w0}$ (kA) while pressurizing the sheet combination with the pair of welding electrodes at a pressurizing force $F_E$ (N) that satisfies the following Formula (B):

$$2000 \times h \leq F_E \leq 4500 \times h \quad (B),$$

provided that h (mm) denotes an arithmetic mean value of sheet thicknesses of the plurality of steel sheets; and
a post-energization step of performing energization two times after the main welding step,
wherein a first post-energization step corresponding to the post-energization step performed for a first time is to perform energization at a first post-energization current value $I_{w1}$ (kA) that satisfies the following Formula (D) for a time $t_{w1}$ (ms) that satisfies the following Formula (E) following no-energization during which energization is paused for a time $t_{c1}$ (ms) that satisfies the following Formula (C) after the main welding step:

$$2 \leq t_{c1} \leq 300 \quad (C);$$

$$0.75 \times I_{w0} < I_{w1} < I_{w0} \quad (D);$$

$$t_{w1} > 100 \quad (E),$$

wherein a second post-energization step corresponding to the post-energization step performed for a second time is to perform energization at a second post-energization current value $I_{w2}$ (kA) that satisfies the following Formulas (G1) and (H1) for a time $t_{w2}$ (ms) following no-energization during which energization is paused for a time $t_{c2}$ (ms) that satisfies the following Formula (F1) after the first post-energization step:

$$2 \leq t_{c2} \leq 300 \quad (F1);$$

$$0.004 \times t_{c2}^2 - 0.3125 \times t_{c2} + 102 \leq I_{w2}/I_{w0} \times t_{w2} \leq 0.0156 \times t_{c2}^2 - 0.625 \times t_{c2} + 300$$
(G1);

$$0.75 \times I_{w0} < I_{w2} \quad (H1),$$

and
wherein steps from the main welding step to a final post-energization step are performed sequentially while maintaining the pressurizing force $F_E$ (N) within a range that satisfies the Formula (B).

2. The method of producing a spot-welded joint according to claim 1, wherein a relationship between the main welding current value $I_{w0}$ and the second post-energization current value $I_{w2}$ satisfies the following Formula (I):

$$I_{w2} > I_{w0} \quad (I).$$

3. The method of producing a spot-welded joint according to claim 1 or 2, the performing spot-welding comprising performing the post-energization step three to N times (N is an integer of 3 or more), wherein an nth post-energization step (n is an integer from 3 to N) corresponding to the post-energization step for a third or subsequent time is to perform energization at an nth post-energization current value $I_{wn}$ (kA) that satisfies the following Formulas (G) and (H) for a time $t_{wn}$ (ms) following no-energization during which energization is paused for a time $t_{cn}$ (ms) that satisfies the following Formula (F) after an (n-1)th post-energization step corresponding to the post-energization step for an (n-1)th time:

$$2 \leq t_{cn} \leq 300 \quad (F);$$

$$0.004 \times t_{cn}^2 - 0.3125 \times t_{cn} + 102 \leq I_{wn}/I_{w0} \times t_{wn} \leq 0.0156 \times t_{cn}^2 - 0.625 \times t_{cn} + 300$$
(G);

$$0.75 \times I_{w0} < I_{wn} \quad (H).$$

4. A spot-welded joint comprising a spot-weld zone in which a plurality of overlapped steel sheets are joined,

wherein at least one steel sheet of the plurality of steel sheets is a high-strength steel sheet whose carbon equivalent Ceq represented by the following Formula (A) is 0.36% by mass or more, provided that [C], [Si], [Mn], [P], and [S] denote contents of C, Si, Mn, P, and S, respectively, in terms of % by mass:

$$Ceq = [C] + [Si]/30 + [Mn]/20 + 2[P] + 4[S] \quad (A),$$

wherein, when an inside of a fusion boundary of a nugget in the spot-weld zone is observed on a cross-section in a sheet thickness direction passing through a center of the nugget, a proportion of crystal grains having an aspect ratio of 7 or more is 50% or less in a middle portion in a long axis direction of the nugget, provided that a portion with a crystal orientation difference of 15 degrees or more is defined as a crystal grain boundary.

FIG.1

FIG.2

# FIG.3

# FIG.4

FIG.5

# FIG.6

Fusion boundary

L2

M

L1

2mm

# FIG.7

# FIG.8

## Nugget center

⌜- - - -⌝ : Fine grain region generated after first post-energization
⌞_ _ _ _⌟

⌈‾‾‾‾⌉ : Fine grain region generated after second post-energization
⌊____⌋

## INTERNATIONAL SEARCH REPORT

| International application No. |
|---|
| **PCT/JP2023/028603** |

| A. | CLASSIFICATION OF SUBJECT MATTER |
|---|---|

*C22C 38/00*(2006.01)i; *C22C 38/58*(2006.01)i; *B23K 11/11*(2006.01)i; *B23K 11/16*(2006.01)i; *B23K 11/24*(2006.01)i
FI:  B23K11/24 315; B23K11/11 540; B23K11/16; C22C38/00 301R; C22C38/58

According to International Patent Classification (IPC) or to both national classification and IPC

| B. | FIELDS SEARCHED |
|---|---|

Minimum documentation searched (classification system followed by classification symbols)

B23K11/00-11/36; C22C38/00; C22C38/58;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2013-86125 A (JFE STEEL CORP) 13 May 2013 (2013-05-13)<br>entire text, all drawings | 1-4 |
| A | WO 2017/010071 A1 (JFE STEEL CORP) 19 January 2017 (2017-01-19)<br>entire text, all drawings | 1-4 |
| A | JP 2016-68142 A (NIPPON STEEL & SUMITOMO METAL CORP) 09 May 2016 (2016-05-09)<br>entire text, all drawings | 1-4 |
| A | JP 2013-128945 A (JFE STEEL CORP) 04 July 2013 (2013-07-04)<br>entire text, all drawings | 1-4 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **19 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/028603**

| Patent document cited in search report | | | Publication date (day/month/year) | Patent family member(s) | | | Publication date (day/month/year) |
|---|---|---|---|---|---|---|---|
| JP | 2013-86125 | A | 13 May 2013 | US | 2014/0305912 | A1 | |
| | | | | entire text, all drawings | | | |
| | | | | WO | 2013/058406 | A1 | |
| | | | | EP | 2769797 | A1 | |
| | | | | CN | 103889634 | A | |
| | | | | KR | 10-2014-0076622 | A | |
| WO | 2017/010071 | A1 | 19 January 2017 | KR | 10-2018-0011319 | A | |
| | | | | CN | 107848062 | A | |
| JP | 2016-68142 | A | 09 May 2016 | (Family: none) | | | |
| JP | 2013-128945 | A | 04 July 2013 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5895430 B
- JP 5891741 B
- JP 6409470 B
- WO 2016139952 A
- JP 2018030178 A
- JP 2013078782 A